(19) Europäisches Patentamt
European Patent Office
Office européen des brevets

(11) EP 1 029 888 A1

(12) EUROPEAN PATENT APPLICATION
published in accordance with Art. 158(3) EPC

(43) Date of publication:
23.08.2000 Bulletin 2000/34

(21) Application number: 98951703.2

(22) Date of filing: 05.11.1998

(51) Int. Cl.7: C08J 9/12, C08L 83/05

(86) International application number:
PCT/JP98/04989

(87) International publication number:
WO 99/24500 (20.05.1999 Gazette 1999/20)

(84) Designated Contracting States:
DE

(30) Priority: 06.11.1997 JP 30433197
13.11.1997 JP 31196397
10.07.1998 JP 19626398
18.09.1998 JP 26453398

(71) Applicant: KANEKA CORPORATION
Osaka-shi, Osaka 530-8288 (JP)

(72) Inventors:
- NAKANISHI, Naoaki
Hyogo 654-0103 (JP)
- KOMITSU, Shintaro
Hyogo 676-0074 (JP)
- FUJIHARA, Takafumi
Nishi-ku Kobe-shi Hyogo 651-2113 (JP)
- OKAMOTO, Toshihiko
Tarumi-ku Kobe-shi Hyogo 655-0002 (JP)
- OUCHI, Katsuya
Hyogo 655-0046 (JP)

(74) Representative:
Strehl Schübel-Hopf & Partner
Maximilianstrasse 54
80538 München (DE)

# (54) FOAMABLE RESIN COMPOSITION AND PROCESS FOR PRODUCING FOAM

(57) This invention provides a foamable resin composition divided into two or more discrete mixing components and which is foamed and set by mixing said discrete mixing components each other,

wherein said composition comprises

(A) an organic compound having a viscosity of 20 Pa • s or less at 23 °C and having a carbon-carbon double bond,
(B) a compound having a hydrosilyl group, and
(C) a foaming agent having a boiling point of 100 °C or lower and/or a compound having an OH group,
each of said two or more discrete mixing components comprises one or more of said components (A), (B) and (C) and has a viscosity of 5 Pa • s or less at 23 °C.

By preparing the two or more discrete mixing components having low viscosities and performing a foaming/setting process in which these discrete mixing components are sprayed or infused after mixing or with mixing, a foam having a high expansion ratio and a fine cell can be obtained.

EP 1 029 888 A1

## Description

### Technical Field

The present invention relates to a foamable resin composition which undergoes a foaming/setting by mixing its components at an ambient temperature or with heating at a relatively low temperature whereby yielding a foam, as well as a method for producing a form using the same.

More particularly, the invention relates to a foamable resin composition capable of providing a foam having a fine cell utilizable preferably for the purpose of soundproofing, heat insulation, waterproofing, airtightness, vibration control, protection, cushioning, decoration and the like, as well as a method for producing a foam using the same by means of a spraying, an infusion or an equivalent process.

### Background of the Invention

A polyurethane foam or a phenol foam has been produced by means of a spraying, an infusion or an equivalent process and used widely as a heat insulating material for a house building. Nevertheless, a polyurethane foam and a phenol foam require isocyanate and a strong acid, respectively, which have posed the safety problems during a foaming process.

As a result, a method in which a silicone foam is sprayed or infused similarly was proposed as an alternative (JP-A-4-354565), but this method only provided a foam whose expansion ratio is as low as 5 or less.

On the contrary, we previously disclosed our invention which is a foamable resin composition which gives a high expansion ratio, has a low toxicity and is capable of undergoing a foaming in situ (WO96/15194 and WO97/43333). We are making an effort to further improve this previous invention to allow a spraying or an infusion to be feasible and to obtain a foam having a fine cell.

Thus, an objective of the present invention is to provide a foamable resin composition which can be sprayed or infused to effect a foaming/setting without using isocyanate or a strong acid at an ambient temperature or with heating at a relatively low temperature to yield a foam having a high expansion ratio and a fine cell, as well as a method for producing such foam.

### Disclosure of the Invention

We made an effort and discovered that by using a foamable resin composition having a viscosity of a certain value or less and consisting of certain components, and by preparing two or more discrete mixing components having low viscosities which are mixed upon a foaming/setting or sprayed or infused with mixing, a foam having a high expansion ratio and a fine cell, thus establishing the present invention.

Namely, an foamable resin composition of the invention is a foamable resin composition which is divided into two or more discrete mixing components which are mixed with each other whereby effecting a foaming/setting, said composition comprising:

(A) an organic compound having a viscosity of 20 Pa • s or less at 23 °C and having a carbon-carbon double bond;
(B) a compound having a hydrosilyl group; and,
(C) a foaming agent having a boiling point of 100 °C or lower and/or a compound having an OH group;
wherein each of said two or more discrete mixing components comprises one or more of said components (A), (B) and (C) and has a viscosity of 5 Pa • s or less at 23 °C.

One of the two or more discrete mixing components is preferably a discrete mixing component which is obtained by adding 5 parts or mote by weight of the component (C) to 100 parts by weight of the component (A) and whose viscosity at 23 °C is 5 Pa • s or less.

The solubility of the component (C) in the component (A) at 23 °C is preferably 5 parts or more by weight in 100 parts by weight of the component (A).

A foaming agent comprised in the component (C) is preferably one or more selected from the group consisting of a hydrofluorocarbon (HFC) having 2 or 3 carbon atoms, a hydrochlorofluorocarbon (HCFC) having 1 to 3 carbon atoms, a hydrocarbon having 3 to 6 carbon atoms and an ether having 2 to 6 carbon atoms. Typically, HFC134a, HFC152a, HCFC22, HCFC141b, HCFC142b, HFC245fa, propane, n-butane, cyclopentane, dimethylether and diethylether may be exemplified.

A compound having an OH group comprised in the component (C) is preferably an organic compound having an OH group bound directly to a carbon atom and/or water.

A foamable resin composition of the invention may comprise as a component (D), in addition to said components (A) to (C), a low boiling point component whose solubility in 100 parts by weight of the component (A) at 23 °C is less than 5 parts by weight and whose boiling point is 0 °C or lower.

Such component (D) is preferably one or more selected from the group consisting of nitrogen, a compressed air, a carbonic acid gas, a flon and a saturated hydrocarbon.

"An organic compound" of a component (A) described above means a compound having substantially no siloxane bonds in its backbone and may for example be a phenolic compound, a bisphenolic compound, a polyether polymer, a polyester polymer and the like, although its structure is not particularly limited.

While the structure of a component (B) is not particularly limited either, one having a linear and/or cyclic organosiloxane having one or more hydrosilyl groups in one molecule may be employed.

According to a foamable resin composition of the invention, a foam having a high expansion ratio and a fine cell can be obtained by performing a spraying or infusion process with mixing or after mixing the discrete mixing components described above. This advantage is based on the fact that the hydrosilylation reaction between a carbon-carbon, double bond of a component (A) and a hydrosilyl group of a component (B) takes place to proceed the setting along with the volatilization of a foaming agent comprised in a component (C) which is promoted by the heat from the reaction described above, or along with the generation of hydrogen as a result of the reaction between a hydrosilyl group of the component (B) and an OH group of an OH group-containing organic compound comprised in a component (C), whereby accomplishing a foaming.

## Best Mode for Carrying Out the Invention

The best mode for carrying out the invention is described below.

### Component (A)

An organic compound having a carbon-carbon double bond which is a component (A) is discussed below.

A backbone of a component (A) is not particularly limited as long as substantially no siloxane bonds are contained, and a monomer backbone may for example be phenolic, bisphenolic, epoxy resin monomers, isocyanate as well as a mixture thereof. A polymeric backbone which may be exemplified is a backbone of polyether-based, polyester-based, polycarbonate-based, saturated hydrocarbon-based, polyacrylate-based, polyamide-based, diallylphthalate-based, phenol-formaldehyde-based (phenol resin-based), polyurethane-based, polyurea-based, melamine-based polymers, epoxy resins and the like, and a phenolic compound, bisphenolic compound, a polyether polymer and a polyester polymer are more preferred since they are readily available.

A phenolic and/or bisphenolic compound may typically be a compound represented by Formula (1):

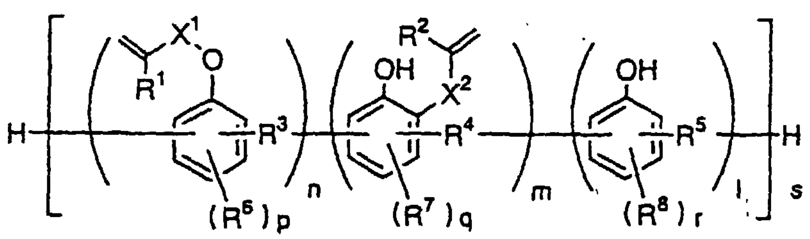

(1)

wherein each of $R^1$ and $R^2$ denotes a hydrogen atom or a methyl group, each of $R^3$, $R^4$ and $R^5$ denotes a divalent substituent having 0 to 6 carbon atoms, each of $R^6$, $R^7$ and $R^8$ is a monovalent substituent having 0 to 6 carbon atoms, each of $X^1$ and $X^2$ is a divalent substituent having 0 to 10 carbon atoms, and each of n, m and l is an integer of 0 to 300, s is an integer of 1 to 300, and each of p, q and r is an integer of 0 to 3.

As examples of a bispenolic compound, listed are O,O'-diallylbisphenol A, 2,2'-diallylbisphenol A, a reaction product between bisphenol A and allylglycidylether or glycidylmethacrylate, bisallylcarbonate of bisphenol A, a bis(meth)acrylate and the like.

Otherwise, a urethane- or urea-based compound obtained by a reaction between an isocyanate compound such as 4,4'-methylenebis(phenylisocyanate) and tolylene-2,6-diisocyanate and allylalcohol, allylglycol or allylamine and the like may also be employed.

In addition, an allylether-based compound obtained by Michael addition of allylalcohol, allylglycol and the like to a bis(meth)acrylate may also be employed.

As examples of a polyether polymer, allyl-terminal polypropyleneoxide and polyethylene oxide are listed. As examples of a polyester polymer, listed are allylester of a phthalic anhydride-ethylene glycol polymer or a phthalic anhydride-diethylene glycol polymer.

A carbon-carbon double bond of a component (A) is not particularly limited as long as an addition reaction by means of a hydrosilylation with a component (B) is possible, and it is acceptable when it is bound to the backbone of a component (A) via a substituent having a valence of two or more.

Such substituent having a valence of two or more may not particularly limited as long as it is a substituent which contains as its constituent atom at least one selected from C, H, N, O, S and a halogen and which has 0 to 10 carbon atoms, and two or more such substituents each having a valence of two or more may be attached covalently with each other to form a substituent having a valence of two or more.

A preferred carbon-carbon double bond is one located in vinyl group, allyl group, metallyl group, allyloxy group, acryl group and methacryl group whose starting material are readily available and which can readily be synthesized.

While such carbon-carbon double bond may be located at any position of a molecule, it is located preferably in a side chain or a terminal for a better reactivity. The number of the double bonds is preferably one or more on average in one molecule, and more preferably two or more. A satisfactory setting can be accomplished even when the average number of the carbon-carbon double bonds is 2 or less if a molecule having two or more carbon-carbon double bonds is contained at a certain level.

The structure of a compound (A) may be linear or branched, and the molecular weight is preferably about 100 to 100,000, particularly 100 to 20,000, although it may not particularly be limited.

A component (A) may be employed as a sole component, or may be a mixture of two or more.

The viscosity of a component (A) is preferably 20 Pa • s or less at 23 °C, more preferably 10 Pa • s or less and particularly 5 Pa • s or less.

While a component (A) may be employed as a mixture of two or more compounds as described above, a viscosity of a single compound exceeding 20 Pa • s is acceptable as long as the viscosity of the component (A) after being mixed is 20 Pa • s or less.

Nevertheless, when the viscosity of a component (A) as a single compound or after being mixed exceeds 20 Pa • s, an event undesirable for forming a satisfactory foam such as an enlarged cell of the foam tends to occur even if a discrete mixing component having a viscosity of 20 Pa • s or less is prepared, for example, by mixing the component (A) and a part of a component (C).

In this context, the viscosity of a component (A) depends mostly on the structure of the backbone and the molecular weight. With regard to representative structures of the backbones listed above, the range, broadly indicated, of the molecular weight with which a component (A) having any of such structures gives a viscosity of 20 Pa • s or less is described below.

Phenolic and bisphenolic compounds: MW of 1000 or less

Polyether compound: MW of 15000 or less
Polyester polymer: MW of 5000 or less

When a bisphenolic compound is employed, a use of only 2,2'-diallylbisphenol A may give a viscosity at 23 °C exceeding 20 Pa • s, and in such case a combined use of O,O'-diallylbisphenol A allows the viscosity to be within the range according to the invention. While the amount to be combined depends on the compositions of other components, it is usually 5 to 95 parts by weight of O,O'-form per 95 to 5 parts by weight of 2,2'-form (amounting to 100 parts by weight in total), preferably 80 to 20 parts by weight of O,O'-form per 80 to 20 parts by weight of 2,2'-form.

**Component (B)**

A compound having a hydrosilyl group which is a component (B) is described below.

While a compound having a hydrosilyl group employed in the invention is not particularly limited and may be one described in WO96/15194, a linear and/or cyclic polyorganosiloxane having one or more hydrosilyl groups in one molecule may preferably be employed since it is readily available.

One preferred particularly is a linear and/or cyclic polyorganosiloxane which has one or more hydrosilyl groups in one molecule and also has a backbone, in its molecule, introduced from one or more compound selected from the group consisting of a styrene derivative, a phenol derivative, a bisphenol derivative, a polyether derivative and an olefin derivative.

An example of linear and cyclic organohydrogen polysiloxanes is a compound represented by Formula (2) or Formula (3):

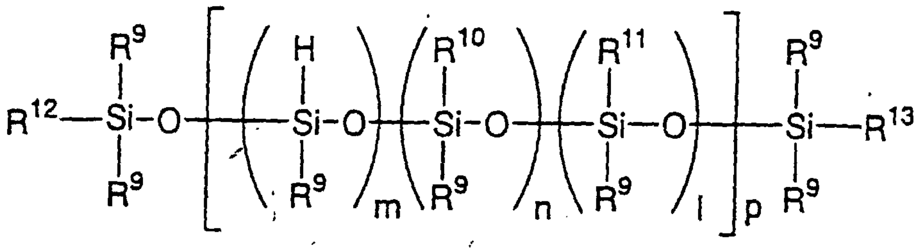

(2)

wherein m≥2, n and l≥0, p≥1, 3≤(m+n+l) x p≤80 , each of $R^9$, $R^{10}$, $R^{12}$ and $R^{13}$ is hydrogen or a hydrocarbon group having 1 to 20 carbon atoms optionally having one or more aromatic substituents, and $R^{11}$ substantially denotes an polyoxyalkylene group;

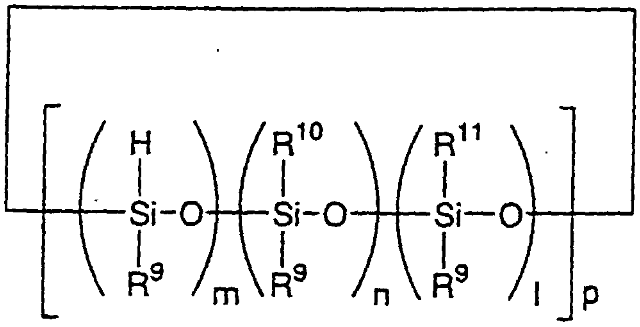

(3)

wherein m≥2, n and l≥0, p≥1, 3≤(m+n+l) x p≤20 and $R^9$, $R^{10}$ and $R^{11}$ are defined as above.

A compound having, in one molecule, two or more linear and cyclic organohydrogen polysiloxanes described above via a substituent having a valence of two or more is employed preferably, and examples of such compound are those shown below.

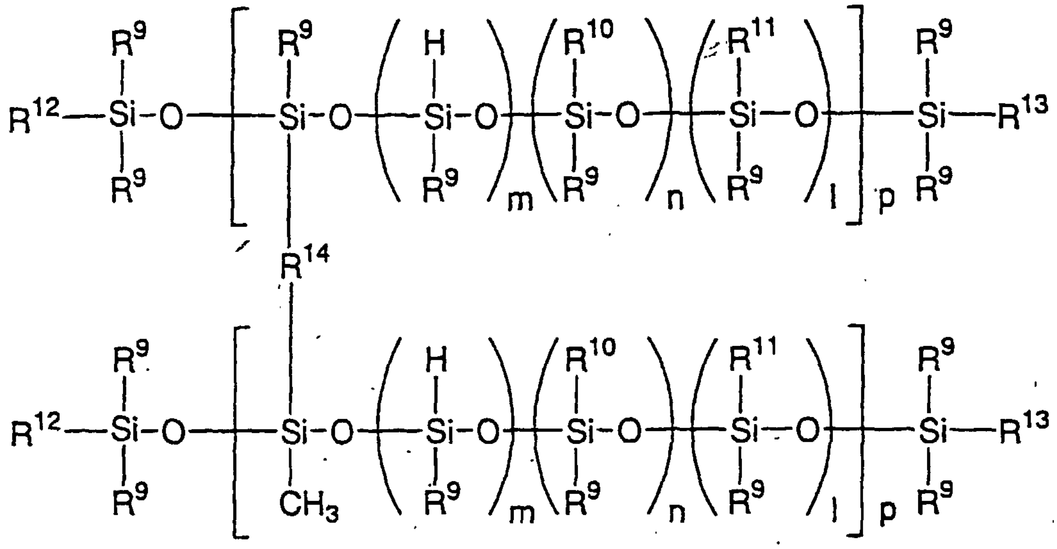

(4)

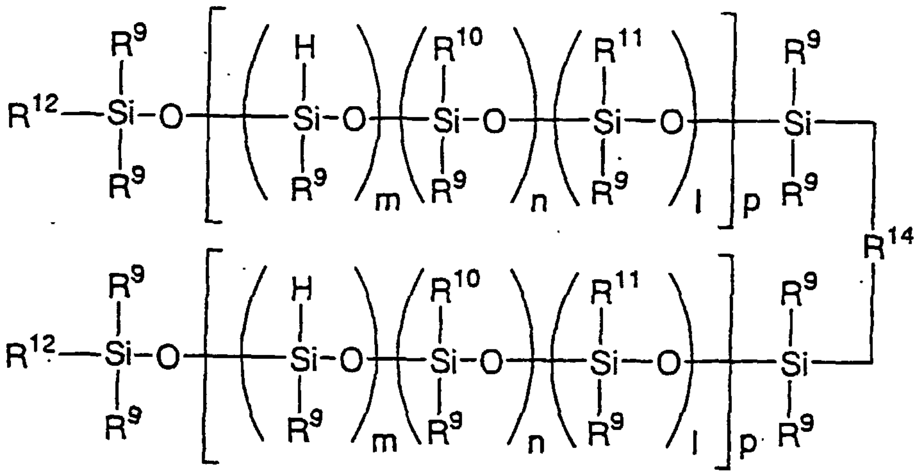

(5)

In Formulae (4) and (5), m≥2, n and l≥0, p≥1, $3 \leq (m+n+l) \times p \leq 80$ and $R^9$, $R^{10}$, $R^{11}$, $R^{12}$ and $R^{13}$ are defined as above, and $R^{14}$ is a substituent having a valence of two or more.

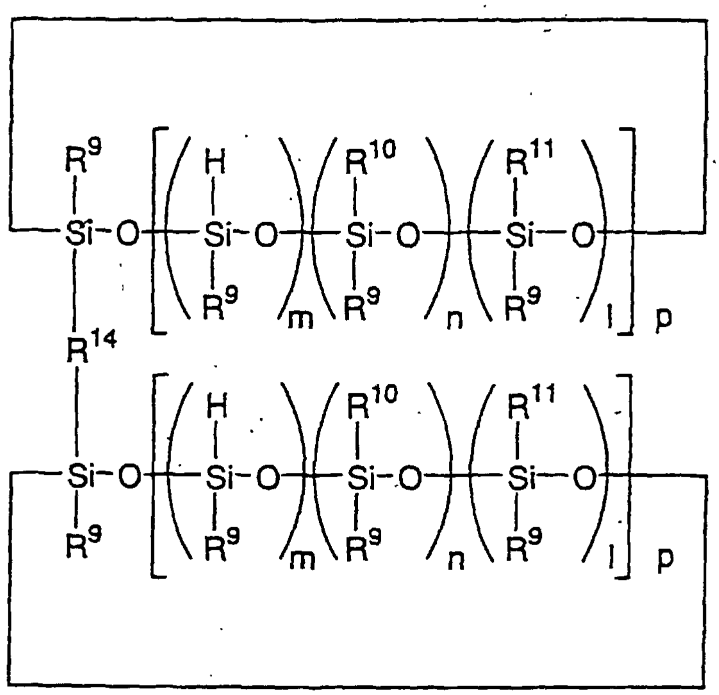

(6)

In Formula (6), wherein m≥2, n and l≥0, p≥1, $3 \leq (m+n+l) \times p \leq 20$ and $R^9$, $R^{10}$, $R^{11}$, and $R^{14}$ are defined as above.

In Formulae (4) to (6) shown above, a substituent having a valence of two or more represented by $R^{14}$ is not particularly limited and one derived from a compound having a carbon-carbon double bond of vinyl group, allyl group, acryl group, methacryl group and the like as well as two or more OH groups of hydroxyl group, carboxyl group and the like in one molecule may appropriately be employed.

Compounds represented by Formulae (4) to (6) shown above are only for exemplification, and one having a structure in which a hydrosilyl group of each compound is further bound via another substituent to a linear or cyclic organohydrogen polysiloxane may also be employed.

Among the compounds represented by Formulae (2) and (3) shown above, those represented by following Formulae (7) and (8) are particularly preferred.

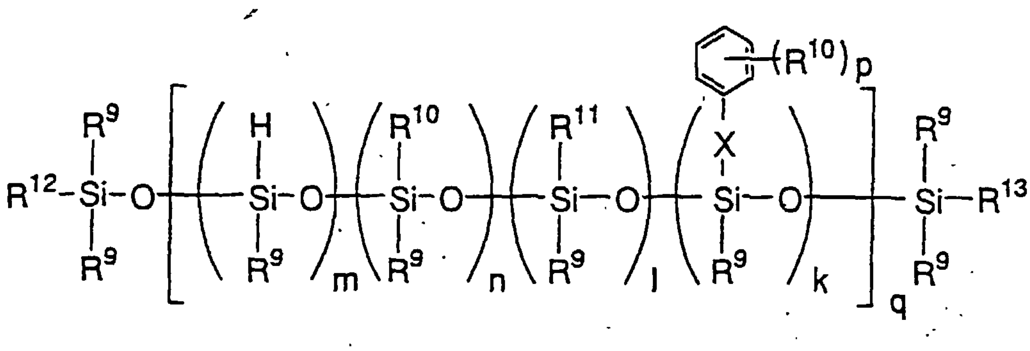

(7)

wherein m≥2, n≥0, l,k and q≥1, p is an integer of 0 to 5, $10 \leq s(m+n+l+k) \times q \leq 80$, each of $R^9$, $R^{10}$, $R^{11}$, $R^{12}$ and $R^{13}$ are defined as above;

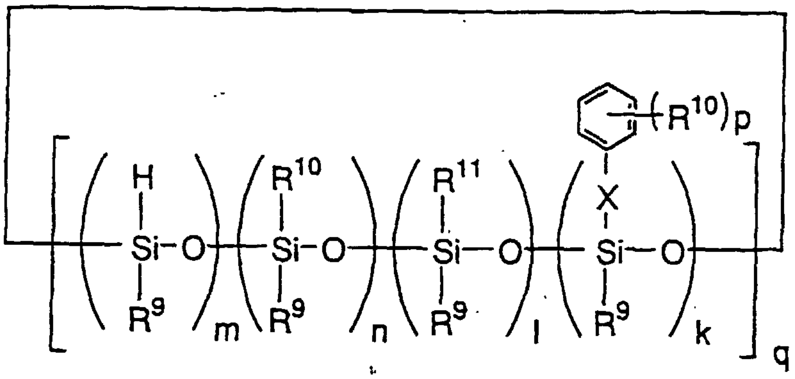

(8)

wherein m≥2, n≥0, l,k and q≥1, p is an integer of 0 to 5, $3 \le (m+n+l+k) \times p \le 20$ and $R^9$, $R^{10}$ and $R^{11}$ are defined as above.

A method for obtaining a compound given by Formula (2) or Formula (3) shown above may for example utilizes a reaction of an polyoxyalkylene compound having at its terminal a double bond (such as in an allyl group) or a functional group capable of reacting with a hydrosilyl group, such as an OH group, and an aromatic ring-containing organic group with a polyorganohydrogen siloxane, or a preliminary synthesis of a polyorganohydrogen siloxane using a polyoxyalkylene chain and an aromatic ring-containing organic group-carrying silicon compound, or a redistribution between such silicon compound and a polyorganosiloxane.

Typically, a reaction of linear and cyclic polyorganohydrogen siloxanes represented by Formulae (9) and (10):

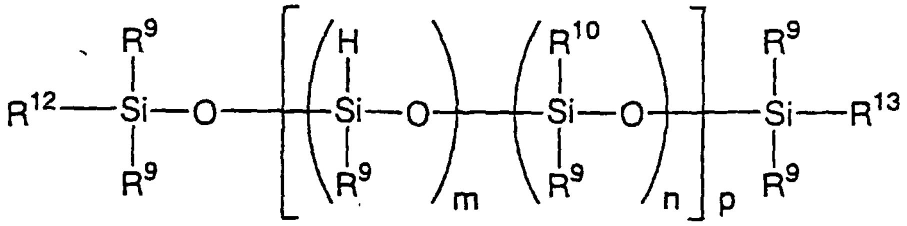

(9)

wherein m≥2, n≥0, p≥1, $10 \le (m+n) \times p \le 80$ and each of $R^9$, $R^{10}$, $R^{12}$ and $R^{13}$ are defined as above;

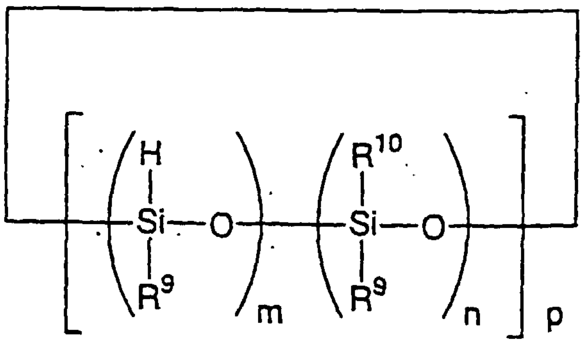

(10)

wherein m≥2, n≥0, p≥1, $3 \le (m+n) \times p \le 20$ and $R^9$ and $R^{10}$ are defined as above;
with a polyether-based compound such as:

$$H_2C{=}CHCH_2\text{-}[(PO)n\text{-}(EO)m]l\text{-}OH$$

$$H_2C{=}CHCH_2\text{-}[(PO)n\text{-}(EO)m]l\text{-}OCH_3$$

$$H_2C=CHCH_2\text{-}[(PO)n\text{-}(EO)m]l\text{-}OC_2H_5$$

$$H_2C=CHCH_2\text{-}[(PO)n\text{-}(EO)m]l\text{-}OC_3H_7$$

$$H_2C=CHCH_2\text{-}[(PO)n\text{-}(EO)m]l\text{-}OC_4H_9$$

$$H_2C=CHCH_2\text{-}[(PO)n\text{-}(EO)m]l\text{-}OPh$$

$$HO\text{-}[(PO)n\text{-}(EO)m]l\text{-}CH_3$$

$$HO\text{-}[(PO)n\text{-}(EO)m]l\text{-}C_2H_5$$

$$HO\text{-}[(PO)n\text{-}(EO)m)l\text{-}C_3H_7$$

$$HO\text{-}[(PO)n\text{-}(EO)m]l\text{-}C_4H_9$$

$$HO\text{-}[(PO)n\text{-}(EO)m]l\text{-}Ph$$

wherein $1 \leq (m+n) \times l \leq 80$ , m and $n \geq 0$, $1 \geq l$, together with an aromatic ring-containing compound such as styrene, 4-methylstyrene, 2,4-methylstyrene, α-methylstyrene, 4-bromostyrene, 2-vinylnaphthalene, allylbenzene, allylanisole, allylphenylether, o-allylphenol, p-isopropenylphenol, phenol, o-cresol, benzylalcohol, phenethylalcohol, benzoic acid, 4-hydroxybenzoic acid and the like may be exemplified.

As examples of a linear polyorganohydrogen siloxane represented by Formula (9), listed are polymethylhydrogen siloxane, polyethylhydrogen siloxane, polyphenylhydrogen siloxane, methylhydrogen siloxane-dimethylsiloxane copolymer, methylhydrogen siloxane-diethylsiloxane copolymer, methylhydrogensiloxane-methylphenylsiloxane copolymer, ethylhydrogen siloxane-dimethylsiloxane copolymer and the like.

As examples of a siloxane unit in a cyclic polyorganohydrogen siloxane represented by Formula (10), listed are methylhydrogen siloxane, ethylhydrogen siloxane, phenylhydrogen siloxane, dimethylsiloxane, diethylsiloxane, methylphenylsiloxane and the like, each of which is copolymerized to form a ring and then employed.

In the polysiloxanes represented by Formula (2) and Formula (3), the ratio of the all silicon atoms bound to a polyoxyalkylene group and an aromatic ring-containing organic group based on all siloxane units is referred to as a modification ratio.

Such a modification ratio is preferably 5 to 90 % in general, and more preferably 5 to 25 % for the purpose of obtaining a sufficient foam controlling effect, although it may vary depending on the composition of other components and the mixing ratio. Since the modification ratio is subjected to a statistical distribution, a value discussed here is a average value. A modification ratio less than 5 % may cause a poor compatibility with an organic compound having a carbon-carbon double bond which may lead to a reduced foam controlling ability, resulting in a difficulty in producing a fine cell in a foam accompanied occasionally with a rupture of a cell in the course of a foaming process, which may give an insufficient expansion ratio. On the contrary, a modification ratio exceeding 90 % poses a large hydrosilyl equivalency which may lead to a foam having only a disadvantageously low expansion ratio when the relevant compound is used as a sole curing agent unless a large amount is used to obtain a foam.

The ratio of the binding of an aromatic ring-containing organic group in a modification ratio described above can be adjusted as desired provided that the compatibility of the mixture upon foaming is not affected adversely.

It is preferable that the structure of a polyoxyalkylene chain contains oxyethylene units at a high ratio, which is preferably 50 to 100 %, as a number unit, based on all oxyalkylene units. A ratio of the oxyalkylene units lower than that specified above results in a difficulty in obtaining a sufficient foam controlling ability.

While the molecular weight of an oxyalkylene chain is not particularly limited, it is preferably 100 to 3000, as a number average molecular weight, and more preferably 200 to 1000. A number average molecular weight less than 100 results in a difficulty in obtaining a sufficient foam controlling ability, while one exceeding 3000 causes a reduction in the density of the hydrosilyl group which may lead to a foam having only a disadvantageously low expansion ratio unless a large amount is used to effect a sufficient setting upon producing a foam.

As a component (B), a compound which is obtained by reacting the following components (a), (b) and (c) for the purpose of obtaining a foam having a uniform cell without internal cracks or voids and exhibiting suppressed shrinkage after completion of a foaming process and in which a hydrosilyl group derived from the component (a) is still preserved substantially may also be employed;

(a) A linear and/or cyclic organohydrogensiloxane having 3 to 10 silicone atoms in one molecule;
(b) A compound having two or more functional groups, in one molecule, capable of reacting with a hydrosilyl group

of the component (a); and,

(c) A compound having one functional group, in one molecule, capable of reacting with a hydrosilyl group of the component (a).

When a compound obtained by reacting these components (a), (b) and (C) is used as a component (B), various advantageous effects such as improvement in the compatibility and in the foam controlling ability as well as the shrinkage after completion of the foaming process as low as 10 % or less can be exerted. Such advantageous effects are considered to be attributable to a component (b) in terms of the improvement in the compatibility and the inhibition of the shrinkage and to a component (c) in terms of the improvement in the compatibility and the foam controlling ability.

An example of a linear organohydrogen siloxane comprised in a component (a) described above is a compound represented by Formula (11):

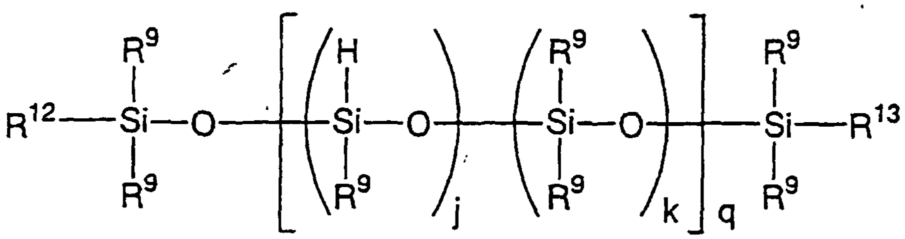

(1 1)

wherein j≥2, k≥0, q≥1, 3≤(j+k) x q≤8 and $R^9$, $R^{12}$ and $R^{13}$ are defined as above.

An example of a cyclic organohydrogen siloxane is a compound represented by Formula (12):

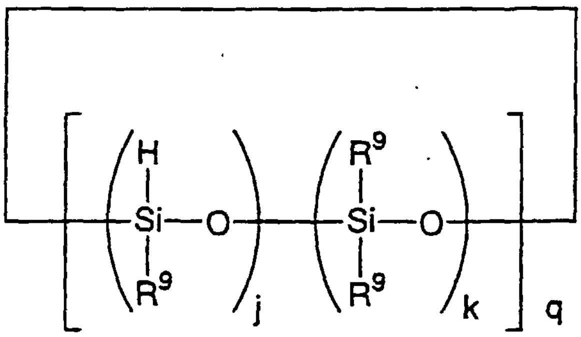

(1 2)

wherein j≥2; k≥0, q≥1, 3≤(j+k) x q≤10 and $R^9$ is defined as above.

The number of hydrosilyl groups in one molecule of a linear or cyclic siloxane which is a components (a) described above is preferably 2 or more and 10 or less, more preferably 2 or more and 6 or less. A number of hydrosilyl groups in one molecule less than 2 results in a reduction in the mechanical strength of a final foam which leads to a difficulty in suppressing the shrinkage, while one exceeding 10 may cause not only the shrinkage but also a crack in the foam.

As examples of a component (a) described above, listed are polymethylhydrogen siloxane, polyethylhydrogen siloxane, polyphenylhydrogen siloxane and the like as well as a copolymer or mixture thereof.

As examples of a cyclic siloxane, listed are 1,3,5-trimethylcyclotrisiloxane, 1,3,5,7-tetramethylcyclotetrasiloxane and 1,3,5,7,9-pentamethylcyclopentasiloxane as well as a mixture thereof.

A component (b) may for example be a compound having, as a functional group capable of reacting with a hydrosilyl group, a carbon-carbon double bond such as one located in vinyl group, allyl group, acryl group and methacryl group or an OH group such as one in hydroxyl group and carboxyl group, and two or more such groups may be present in one molecule.

While a functional group listed above may be located in any position in the molecule, it is preferably located in a side chain or at a terminal for a desirable reactivity. The number of the functional groups reactive with a hydrosilyl group in one molecule is 2 or more and 4 or less, preferably 2 or more and 3 or less. A number of the functional groups reactive with a hydrosilyl group in one molecule exceeding 4 is not preferable since a gel may be formed upon the reaction between a component (a) and a component (b).

The backbone of a component (b) is not particularly limited either, and those exemplified are an ordinary organic monomer backbone or organic polymer backbone as well as an inorganic material such as water.

An organic monomer backbone may for example be hydrocarbon-based, aromatic hydrocarbon-based, phenolic, bisphenolic, epoxy resin monomers, isocyanate as well as a mixture thereof. An organic polymer backbone may for example be polyether-based, polyester-based, polycarbonate-based, saturated hydrocarbon-based, polyacrylate-based, polyamide-based, diallylphthalate-based, phenol-formaldehyde-based (phenolic resin-based), polyurethane-based, polyurea-based, melamine-based polymers, epoxy resin and the like.

As examples of a component (b), listed are an $\alpha,\omega$ - alkadiene such as 1,9-decadiene, divinylbenzene, diallylbenzene, 1,4-butanediol and allylether, phthalic anhydride and its allylester, O,O'-diallylbisphenol A, 2,2'-diallylbisphenol A, ethylene glycol or diethylene glycol and its allylether, allyl-terminated polypropylene oxide and polyethylene oxide, allylester of phthalic anhydride-ethylene glycol polymer or phthalic anhydride-diethylene glycol polymer, 9-decen-1-ol, ethylene glycol monoallylether and the like. Otherwise, those exemplified as component (a) may also be employed as appropriate. When a component (b) has a structure similar to that of a component (A), the compatibility of the system can be increased and a foam having a fine cell can be obtained.

While the molecular weight of a component (b) is not particularly limited, one not higher than about 100,000 is appropriate and one not higher than 10,000 is preferred.

In a component (c), a functional group capable of reacting with a hydrosilyl group may for example be a functional group capable of reacting with a hydrosilyl group of a component (b) described above. The position may be any position, similarly as in the case of a component (b), in the molecule, although a side chain or a terminal is a preferred location for a better reactivity. The backbone of a component (C) may be an organic monomer and/or an organic polymer listed above as the backbone of a component (b).

As examples of a component (c), listed are an $\alpha$-olefin such as 1-hexene, 1-octene, 1-decene and the like, an alcohol such as 1-propanol, 1-octanol, ethylene glycol monoethyl ether and the like, a carboxylic acid such as 2-ethylhexanoic acid, a (meth)acrylate such as butyl acrylate, methyl methacrylate and the like, an aromatic compound such as styrene, 4-methylstyrene, 2,4-dimethylstyrene, $\alpha$-methylstyrene, 4-bromostyrene, 2-vinylnaphthalene, allylbenzene, allylanisol, allylphenylether, o-allylphenol, p-isopropenylphenol and the like, an polyoxyalkylene, a polyester or an acrylic polymer in which one terminal is substituted with an allyl group, a hydroxyl group, a (meth)acrylic group or a carboxyl group and the other terminal is substituted with an organic group undergoing no reaction with a hydrosilyl group.

While the molecular weight of a component (c) is not particularly limited, one not higher than about 100,000 is appropriate and one not higher than 10,000 is preferred.

The mixing ratios of the components (a), (b) and (c) described above, namely when the molar number of the hydrosilyl group of the component (a) is represented as x, and that of the functional group of the component (b) capable of reacting with the component (a) is represented as y and that of the functional group of the component (c) capable of reacting with the component (a) is represented as z, the values of y/x and z/x are not particularly limited. Nevertheless, $0.01 \leq y/x \leq 0.5$, $0.001 \leq z/x \leq 0.8$ are preferable and $0.1 \leq y/x \leq 0.4$, $0.01 \leq z/x \leq 0.4$ are more preferable.

A value of y/x less than 0.01 leads to a difficulty in exerting an intended satisfactory inhibition of the shrinkage, while one exceeding 0.5 may cause a disadvantage such as an increased viscosity associated with the increase in the molecular weight upon reaction between a component (a) and a component (b). A value of z/x less than 0.001 leads to an insufficient compatibility of the system which may result a coarse cell of a foam, while one exceeding 0.8 tends to give a reduced shrinkage-inhibiting effect.

In order to react each of the components (b) and (c) with a component (a), a catalyst similar to that employed in a reaction between a component (A) and a component (B), (hydrosilylation) and in a reaction between a component (B) and a compound having an OH group comprised in a component (C), which are discussed later, is usually employed.

A compound obtained by the reaction of each of the components (a), (b) and (c) described above occurs as a mixture of the compounds having different structures because of the multifunctionality of the component (b), and may for example be one comprising a compound represented by Formula (13) shown below. Such mixture can be used as it is without purification.

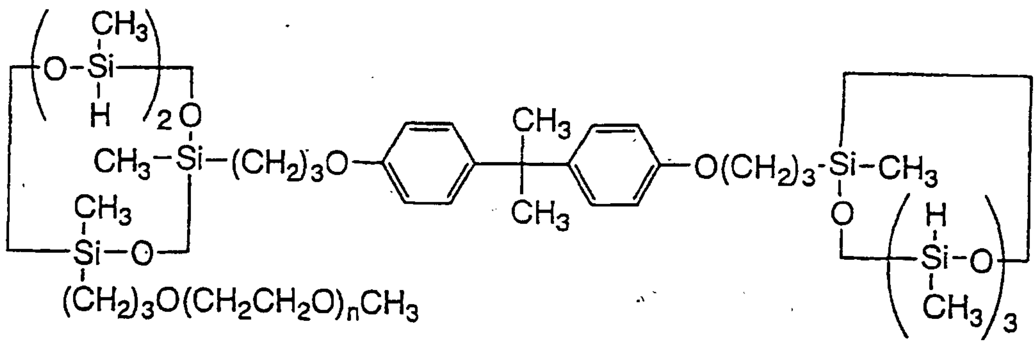

(1 3)

wherein n is an integer of 1 to 100, preferably 40 or less.

A component (B) in this invention described above may be employed as a sole component, or may be a mixture of two or more.

The number of hydrosilyl groups of a component (B) is preferably greater than one, more preferably 2 or more, as an average number in one molecule for the purpose of a better setting performance similarly as in the case of the carbon-carbon double bond of a component (a). Since this component (B) undergoes a dehydrogenation condensation with, a component (c) whereby being involved in the foaming process, the preferable number of the hydrosilyl groups is generally 3 or more although it depends on the intended expansion ratio. Nevertheless, a satisfactory setting can be accomplished even when the average number is 2 or less if a molecule having two or more hydrosilyl groups is contained at a certain level. The upper limit of this number is preferably 80, more preferably 50, which allows a compound to be readily available and enables a satisfactorily balanced foaming and setting.

Though the ratio between a component (B) and a component (A) in a foamable resin composition according to the invention is not particularly limited, when the molar number of the double bonds of the component (A) is represented as X and that of the hydrosilyl groups of the component (B) is represented as Y, it ranges preferably from X:Y=30:1 to 1:30, more preferably 10:1 to 1:10, most preferably 5:1 to 1:5.

**Component (C)**

A foaming agent and a compound having, an OH group comprised in a component (C) are described below.

A foaming agent may appropriately be selected from the materials employed generally in an organic foam, such as polyurethane, phenol, polystyrene, polyolefins and the like.

While the type of the foaming agent described above is not particularly limited, one or more compounds selected from organic compounds such as a hydrocarbon, a ketone-based compound, a flon, an ether and the like may be preferably employed for the purpose of better handling and safety.

A hydrocarbon may for example be methane, ethane, propane, n-butane, iso-butane, n-pentane, iso-pentane, neo-pentane, n-hexane, 2-methylpentane, 3-methylpentane, 2,2-dimethylbutane, 2,3-dimethylbutane, cyclopentane, cyclobutane, cyclopentane, cyclohexane and the like.

A ketone-based compound may for example be acetone, methylethylketone, methylisopropylketone and the like.

A flon may for example be trichlorofluoromethane (R11), dichlorofluoromethane (R12), chlorotrifluoromethane (R13), bromotrifluoromethane (R13B1), tetrafluoromethane (R14), dichlorofluoromethane (R21), chlorodifluoromethane (R22), trifluoromethane (R23), difluoromethane (R32), fluoromethane (R41), tetrachlorodifluoroethane (R112), trichlorotrifluoroethane (R113), dichlorotetrafluoroethane (R114), dibromotetrafluoroethane (R114B2), chloropentafluoroethane (R115), hexafluoroethane (R116), chlorotrifluoroethane (R123), tetrafluoroethane (R134a), dichlorofluoroethane (R141b), chlorodifluoroethane (R142b), difluoroethane (R152a), octafluoropropane (R218), dichloropentafluoropropane (R225), hexafluoropropane (R236ea), pentafluoropropane (R245fa), octafluorocyclobutane (RC318), hexafluorobutane (R356mffm), pentafluorobutane (R365mfc), decafluoropentane (R4310mee) and the like.

Taking an environmental issue into consideration, hydrochlorofluorocarbon (HCFC), called also as a flon substitute, is more desirable than chlorofluorocarbon (CFC), and hydrofluorocarbon (HFC) is particularly preferred. Thus, those particularly preferred are tetrafluoroethane, difluoroethane, octafluoropropane, hexafluoropropane, pentafluoropropane, octafluorocyclobutane, hexafluorobutane and pentafluorobutane.

An ether may for example be dimethylether, diethylether, ethylmethylether, dipropylether, diisopropylether, butylmethylether, butylethylether, t-butylmethylether, t-butylethylether, 1,1-dimethylpropylmethylether, methylpentafluoroethylether, 2,2,2-trifluoroethylether, methyl(trifluoromethyl)tetrafluoroethylether, methyl-n-nonafluorobutylether and ethyl-n-nonafluorobutylether and the like.

The solubility of a foaming agent in a component (A) at 23 °C is preferably 5 parts by weight or more, more preferably 10 parts by weight or more, most preferably 15 parts by weight or more in 100 parts by weight of the component (A). A solubility less than 5 parts by weight is not preferable since a cell in a foam becomes coarse and also since it is difficult to obtain a foam having an intended high expansion ratio.

The solubility of a foaming agent in a component (A) is determined, for example, by the following procedure. Thus, when the boiling point of the foaming agent is 23 °C or higher, then the component (A) before and after dissolving the foaming agent is weighed to obtain the difference, while if such procedure is impossible because of any reason such as the boiling point of the foaming agent below 23 °C then the component (A) and the foaming agent are weighed into a pressure-resistant container having a known volume and then the headspace of the pressure-resistant container is examined for its volume and pressure from which the foaming agent remaining as an insoluble is quantified, whereby calculating the solubility.

The boiling point of a foaming agent is preferably 100 °C or lower, more preferably 80 °C or lower, most preferably 50 °C or lower. A boiling point exceeding 100 °C results in a poor balance between the foaming and the setting, which leads to a difficulty in obtaining a foam having a high expansion ratio.

A foaming agent satisfying the requirements described above (hereinafter referred to as a specific foaming agent) may for example be a hydrocarbon and a flon although it may vary depending on the structure of a component (A), and, among these materials, one or more selected from the group consisting of a hydrofluorocarbon (HFC) having 2 to 3 carbon atoms, a hydrochlorofluorocarbon (HCFC) having 1 to 3 carbon atoms, a hydrocarbon having 3 to 6 carbon atoms, a ketone-based ompouned having 3 to 5 carbon atoms, an ether having 2 to 6 carbon atoms, each of which has a solubility at 23 °C is 5 parts by weight or more in 100 parts by weight of the component (A), is employed preferably.

Those exemplified typically are HFC134a, HFC152a, HCFC141b, HCFC142b, HFC245fa, propane, cyclopentane, dimethylether, diethylether, methyl-n-nonafluorobutylether, ethyl-n-nonafluorobutylether and the like.

A foaming agent other than the specified foaming agents listed above may additionally be employed in combination with any of the specified foaming agents. Such additional foaming agent is added in an amount preferably of 50 parts by weight or less, more preferably 30 parts by weight or less, to 100 parts by weight of a specific foaming agent listed above.

Another constituent of a component (C), which is a compound having an OH group, is discussed below.

While the type of a compound having an OH group employed in this invention is not particularly limited, a compound whose OH group is bound directly to a carbon atom, such as an alcohol, a carboxylic acid and the like, may be exemplified.

As examples of an alcohol, listed are n-propanol, iso-propanol, n-butanol, iso-butanol, ethylene glycol and the like, while a carboxylic acid may for example be hexanoic acid, 2-ethylhexanoic acid, adipic acid, meso-1,2,3,4-tetracarboxylic acid, benzoic acid, phthalic acid, isophthalic acid, terephthalic acid and the like.

It is also possible to use two or more OH compounds in order to adjust the foaming rate. For this purpose, a preferred combination may for example be a primary alcohol such as n-propanol with a secondary alcohol such as iso-propanol, a carboxylic acid with a primary alcohol and a carboxylic acid with water.

A foaming agent and a compound having an OH group described above may independently be employed as a sole component, or in combination.

An foaming resin composition of the invention may further utilize, for the purpose of an effective foaming, an inorganic foaming agent such as $NaHCO_3$, $(NH_4)_2CO_3$, $NH_4HCO_3$, $NH_2NO_2$, $Ca(N_3)_2$, $NaBH_4$ and the like, an organic foaming agent such as azodicarboxylic amide, azobisisobutyronitrile, barium azodicarboxylate, dinitrosopentamethylene tetramine, p-toluenensulfonylhydrazide and the like, a carbon dioxide generation by means of an reaction between isocyanate and an active hydrogen group-containing compound, a mechanical stirring and the like.

### Component (D)

A low boiling point compound whose solubility at 23 °C in 100 parts by weight of a component (A) is 5 parts by weight or less and whose boiling point is 0 °C or lower, which is a component (D), is described below.

The solubility of a component (D) in a component (A) at 23 °C is preferably less than 5 parts by weight in 100 parts by weight of the component (A), more preferably less than 2 parts by weight.

A component (D) is used effectively for improving a spraying or infusing performance of a discrete mixing component upon a foaming/setting of a foamable resin composition. Thus, in a case of a large difference in the viscosity between the discrete mixing components or a less pressure of a discrete mixing component, the pressure in a reactor can be adjusted by utilizing the component (D), whereby achieving a stability in the discharging rate and the mixing ratio.

While the type of a low boiling point component employed as a component (D) is not particularly limited, it is desirable to employ one or more compounds selected from the group consisting of an organic compound such as a hydrocarbon and a flon, carbon dioxide, nitrogen and air, for the purpose of better handling and safety.

Those employed preferably as such hydrocarbon, flon or organic compound discussed above are those satisfying the requirements described above in terms of the boiling point and the solubility in a component (A) among the foaming agents exemplified above as components (C).

**Catalyst**

In the present invention, a catalyst can appropriately be employed for a dehydrogenation condensation between a component (B) and a component (C) and for an addition reaction (hydrosilylation) between a component (A) and a component (B).

While a hydrosilylation catalyst is not particularly limited, chloroplatinic acid, a platinum-olefin complex and a platinum-vinylsiloxane complex may for example be employed preferably since they are readily available and have satisfactory catalyst activities. Any one of these catalysts may be employed as a sole component, or in combination with the others.

While the amount of a catalyst is not particularly limited, it is preferably $10^{-1}$ to $10^{-8}$ moles per 1 mole of hydrosilyl group, more preferably $10^{-2}$ to $10^{-6}$ moles.

A catalyst listed above may be used in combination with a promoter, such as triphenylphosphine.

The amount of a promoter is not particularly limited, and it is preferably $10^{-2}$ to $10^{2}$ moles per 1 mole of a catalyst, more preferably $10^{-1}$ to 10 moles.

**Other components**

In addition to the components described above, a solvent, a filler, an anti-aging agent, a radical inhibitor, a UV absorber, an adhesiveness-imparting agent, an flame retarder, a polydimethylsiloxane-polyalkyleneoxide-based surfactant or an organic surfactant (polyethylene glycol alkylphenylether, etc), or other foam-controlling agent, a shelf life improving agent, an anti-ozone deterioration agent, a light stabilizer, a thickening agent, a plasticizer, a coupling agent, an antioxidant, a heat stabilizer, a conductivity-imparting agent, an antistatic agent, a radiation shielding agent, a nucleating agent, a phosphorus-based peroxide decomposing agent, a glidant, a pigment, a metal inactivator, a physical property modifier and the like, may also be added to a foamable resin composition as long as the objectives and the advantageous aspects of the invention are not affected adversely.

Although in this invention it is preferable to use as a foaming agent one which has a boiling point of 100 °C or lower as described above, a solvent or a plasticizer having a boiling point of 100 °C or higher may be acceptable when used as an additive.

**Production of foam**

In a method for producing a foam using a foamable resin composition of the invention, two or more discrete mixing components each comprising one or more components (A) to (C) described above and each having a viscosity of 5 Pa • s or less at 23 °C are prepared.

The combination of the discrete mixing components can be selected as desired based on the compatibility and the ratios, and examples are a combination of a discrete mixing component 1 (hereinafter referred to as mixing component 1) consisting of a component (A), a component (C) and a hydrosilylation catalyst and a discrete mixing component 2 (hereinafter referred to as mixing component 2) consisting of a component (B), a combination of a mixing component 1 consisting of a component (A) and a hydrosilylation catalyst and a mixing component 2 consisting of a component (B) and a component (C), and a combination of a mixing component 1 consisting of a component (A), a component (C) and a hydrosilylation catalyst and a mixing component 2 consisting of a component (B) and a component (C). Three discrete mixing components may also be employed in a combination to adjust the ratios, the viscosity and the like.

A component (D), when used, may be added to any of the discrete mixing components as desired.

The viscosity of each discrete mixing component at 23 °C is preferably 5 Pa • s or less, more preferably 2.5 Pa • s or less. A viscosity exceeding 5 Pa • s is not preferable since it results in an insufficient mixing upon producing a foam by mixing this discrete mixing component or yield a foam having uneven cells.

The viscosity described above can be determined using an ordinary viscometer such as a type B viscometer or a type E viscometer. When a foaming agent having a low boiling point is employed as a component (C), the viscosity should be determined in a pressure-resistant container. When it is difficult to determine the viscosity in a pressure-resistant container, it is possible to assume the viscosity based on the viscosity after an addition of other compounds

such as HCFC141b as long as there are no factors by which the viscosity characteristics are greatly influenced.

A method for producing a foam may be one obtained by appropriately combining or partly modifying the methods which have already been developed for polyurethane foams, phenol foams, silicone foams and the like to allow them to be capable of being applied to the present invention.

A method for producing each foam described above is based generally on the combination of a feeding process for mixing each component, an accompanying mixing process and an discharging process of the mixed composition. A typical method is discussed below.

A feeding process for mixing includes a process wherein each mixing component is placed in an identical container, a process wherein a partitioning placed previously in a single container is broken or removed, a process wherein each component is fed by being pressurized mechanically or manually, or by using a compressed air, or by utilizing a pressure which is generated when a low boiling point compound is volatilized.

While a certain procedure is taken generally to obtain a satisfactory mixture of the mixing components thus fed, and for this purpose, a process to effect the mixing inside and/or outside of the mixing device may be contemplated. Such mixing process includes a process using an collision mixing, a process using a stirrer placed in a mixing device, a process employing a mechanical mixing, a process using a static mixer, a process where a container or a mixing device is vibrated, as well as a combination thereof.

A discharging process of a composition once mixed includes a process wherein a mixing component is discharged as it is using a spray gun, a nozzle or a conduit, a process wherein the discharge is performed under pressure using an instrument, a process wherein the discharge is performed using a gas such as a compressed air, nitrogen and carbonic acid gas, and a process wherein a composition is discharged together with a low boiling point compound under the volatilization pressure thereof. In this context, a part or all of a low boiling point compound used in this invention may be a foaming agent comprised which is a component (C).

While the individual procedures of the feeding, mixing and discharging processes are discussed above separately, they may be combined and such combined process is usually discussed as one of the following three types.

In a combined process of the first type, each mixing component is pressurized after or during feeding to effect a mixing inside or outside of a mixing device and then discharged using a spray gun or infused using a nozzle. A mixing process may be a collision mixing, i.e., a procedure employing a pressurization to allow the mixing components to be attacked by each other whereby improving the condition of a mixture. Otherwise, it is also effective to place a stirrer in a spray gun to further improve the mixing performance.

In a combined process of the second type, each component is charged in a container, and the internal space of the container is pressurized whereby a mixing component is spouted out from a conduit and mixed using a static mixer or a mechanical mixing device and then sprayed or discharged. The pressurization of the internal space of the container may be performed by filling a mixing component containing a low boiling point compound in a container, or increasing the pressure in the container using a gas such as a compressed air, nitrogen and a carbonic acid gas, as is conducted in a method called an aerosol method.

In a combined process of the third type, two or more discrete mixing components are placed in a container which can be agitated and then mixed with agitation, or placed in a container which is plastic and can be deformed and then mixed by deforming the container, thereafter a composition once mixed is discharged.

A more typical example of the combination of the state of the art involves a mechanical feeding of each mixing component to a mixing device to effect a collision mixing followed by a discharging using a spray gun, or a feeding of a mixing component containing a low boiling point compound by, means of a volatilization pressure of the low boiling point compound followed by a mixing using a static mixer followed by a discharging via a nozzle, or a mixing of each mixing component in a plastic container such as a bag made from a synthetic resin film followed by a mixing by means of deforming or agitating the container manually followed by a discharging from the container.

In addition to the typical example described above, the devices and their shapes and structures, the methods for pressurizing, the modes of mixing, etc., disclosed in JP-B-54-9220, JP-A-62-95329, JP-A-62-114561, JP-B-4-16219, JP-A-4-354565, JP-B-6-98285, JP-B-6-511186, JP-A-6-128404, WO93/08099, USP 3,633,795, 3,784,110, 4,311,254, 4,399,930, 4,555,529, German Patent No.3,638,379 and the like, may also be employed.

As examples of the devices applicable to the invention, listed are PROPORTION UNIT FF/H-D-GUN SYSTEM manufactured by GUSMER, HIGH PRESSURE UNIT PSM/GP GUN SYSTEM manufactured by ISOTHERM, FORMULATOR L-43P TWIN PACK AIRLESS GUN SYSTEM manufactured by BINKS, MEGPF/BABY TYPE-A SYSTEM manufactured by HENNECHE, MINI PROBLOWER UNIT HH SYSTEM manufactured by GLAS-CRAFT, METALLING S CARDIO SYSTEM manufactured by CANNON, ASAHI SANNAC HARD FOAM URETHANE APW and the like.

## Examples

The present invention is further described in the following Examples and Comparative Examples which are

not intended to restrict the invention.

**Synthesis Example 1**

A four-necked flask attached to a dropping funnel, a three-way valve-fitted condenser, a thermometer and a mechanical stirrer was charged with 120 g of methylhydrogen polysiloxane (SHINETSU KAGAKU, KF-99) (hydrosilyl group: 2.0 mol), 200 ml of toluene and 13 mg of platinum-vinylsiloxane complex (3 % by weight solution in xylene), and heated at 70 °C under a nitrogen flow containing 1 % oxygen from the three-way valve, and then 11.8 g (0.10 mol) of α-methylstyrene and 80 g of an ethyleneoxide polymer whose one terminal is modified with a methyl group and another terminal is modified with an allyl group (number average molecular weight: 400) (allyl group: 0.20 mol) were added and reacted.

After distilling toluene off, methylhydrogen polysiloxane (B-1) modified with a phenethyl group and a polyoxyalkylene group was obtained as a viscous liquid.

**Synthesis Example 2**

Similarly as in Synthesis Example 1, 120 g of 1,3,5,7-tetramethylcyclotetrasiloxane (SHINETSU KAGAKU, KF-9902), 200 ml of toluene and 13 mg of platinum-vinylsiloxane complex were charged and then 11.8 g of α-methylstyrene and 80 g of an ethyleneoxide polymer whose one terminal is modified with a methyl group and another terminal is modified with an allyl group were added and reacted.

After distilling toluene and cyclosiloxane off, tetramethylcyclotetrasiloxane (B-2) modified with a phenethyl group and a polyoxyalkylene group was obtained as a viscous liquid.

**Synthesis Example 3**

Similarly as in Synthesis Example 1, 120 g of 1,3,5,7-tetramethylcyclotetrasiloxane, 200 ml of toluene and 13 mg of platinum-vinylsiloxane complex were charged and then 61.6 g of O,O'-diallylbisphenol A and 16.2 g of an ethyleneoxide polymer whose one terminal is modified with a methyl group and another terminal is modified with an allyl group were added and reacted.

After distilling toluene and cyclosiloxane off, a modified tetramethylcyclotetrasiloxane (B-3) was obtained as a viscous liquid.

**Synthesis Example 4**

A four-necked flask attached to a thermometer, a refluxing condenser, a dropping funnel and a mechanical stirrer was charged with 369 g of a novolac type phenol resin (PSM4261, GUNEIKAGAKU, OH content: 9.71 mmol/g) and 1600 ml of acetone, and then 500 g of potassium carbonate was added with stirring. After adding 520 g of allyl bromide dropwise in portions, the reaction was continued at 55 °C for 6 hours. The reaction mixture was filtered, concentrated, and washed with an aqueous solution of sodium hydroxide followed by hydrochloric acid, and then mixed with 74 g of aluminum silicate and stirred, and then further filtered and concentrated to obtain 400 g of an allylated phenol resin (A-1) whose hydroxyl group is allylated. The unsaturated group content based on the iodine value was 7.3 mmol/g.

In addition to A-1 thus obtained, each of the following compounds was employed as a component (A) in the following Examples and Comparatives.

O,O'-Diallylbisphenol A
2,2'-Diallylbisphenol A

Terminally allyletherified polypropyleneoxide (A-2, number average molecular weight: about 8,000)

Terminally allyletherified phthalic acid/diethylene glycol copolymer (A-3, number average molecular weight: 1,000)

As a setting catalyst, the platinum-vinylsiloxane complex (3 % by weight solution in xylene) employed in Synthesis Example 1 was employed.

**Examples 1 to 23, Comparative ExampleS 1 to 4**

Fluid A and Fluid B were prepared on the basis of the compositions shown in Tables 1 to 4 and then charged in two pressure-resistant containers fitted with valves and then mixed. After mixing, a component (C) was dissolved to yield a uniform liquid.

The both pressure-resistance containers were connected to a static mixer via conduits, and subsequently the outlet valves were opened simultaneously to effect the mixing and the discharging through the static mixer. The mixing performance upon discharging (poor mixing or not), the discharging performance (stable or not) and the size of a cell after the foaming/setting were compared.

Each of the compositions of Examples 1 to 23 provided satisfactory mixing and discharging performances, and yielded a satisfactory foam whose cell was fine.

On the contrary, any of comparative Examples 1 to 3 employing a gas having a low solubility such as nitrogen in the absence of a component (C) exhibited a poor mixing performance and no stable discharging. In Comparative Example 4 employing as a component (A) a compound having a viscosity exceeding 20 Pa • s, the cell became too large and the closed-cell ratio was low although the discharging performance was satisfactory.

Table 1

| | | Compound | Unit | Example 1 | Example 2 | Example 3 |
|---|---|---|---|---|---|---|
| Fluid A | (A) | O,O'-Diallylbisphenol A | g | 43.2 | 43.2 | 43.2 |
| | | 2,2'-Diallylbisphenal A | g | 64.8 | 64.8 | 64.8 |
| | | Platinum Catalyst | mg | 460 | 460 | 460 |
| | (C) | HCFC22 | g | 17.1 | 17.1 | 17.1 |
| Fluid B | (B) | B-1 | g | 74.2 | | |
| | | B-2 | g | | 73.5 | |
| | | B-3 | g | | | 104.8 |
| | (C) | HCFC22 | g | 17.8 | 17.8 | 17.8 |
| Viscosity (23°C) | Component (A) | | Pa • s | 1.40 | 1.40 | 1.40 |
| | Fluid A | | Pa • s | 0.20 | 0.20 | 0.20 |
| | Component (B) | | Pa • s | 0.80 | 0.50 | 0.80 |
| | Fluid B | | Pa • s | 0.16 | <0.10 | 0.16 |
| Mixing Performance | | | | good | good | good |
| Discharging Performance | | | | good | good | good |
| Form Quality | Density | | $kg \cdot m^3$ | 60 | 48 | 50 |
| | Cell Size | | mm | <1 | <1 | <1 |
| | Closed-Cell Ratio | | % | 80 | 78 | 80 |
| | Notes | | | | Shrinkage 30% | Shrinkage 10% |

Table 2

| | | Compound | Unit | Example 4 | Example 5 | Example 6 | Example 7 | Example 8 | Example 9 | Example 10 | Example 11 | Example 12 |
|---|---|---|---|---|---|---|---|---|---|---|---|---|
| Fluid A | (A) | O,O'-Diallylbisphenol A | g | 43.2 | 43.2 | 43.2 | 43.2 | 43.2 | 43.2 | 43.2 | 43.2 | 43.2 |
| | | 2,2'-Diallylbisphenol A | g | 64.8 | 64.8 | 64.8 | 64.8 | 64.8 | 64.8 | 64.8 | 64.8 | 64.8 |
| | | Platinum Catalyst | mg | 460 | 460 | 460 | 460 | 460 | 460 | 460 | 460 | 460 |
| | (C) | HFC134a | g | 18.2 | | | 18.2 | 18.2 | 12.1 | 18.2 | 18.2 | |
| | | HFC152a | g | | 12.9 | | 5.0 | | | | | |
| | | HCFC142b | g | | | 19.6 | | | | | | |
| | | HCFC141b | g | | | | | 11.6 | | | | |
| | | HFC245fa | g | | | | | | 8.0 | | | |
| | | HFC4310mee | g | | | | | | | | | 43.1 |
| Fluid B | (B) | B-3 | g | 104.8 | 104.8 | 104.8 | 104.8 | 104.8 | 104.8 | 104.8 | 104.8 | 104.8 |
| | (C) | HFC134a | g | 25.9 | | | 32.3 | 25.9 | 20.2 | 21.0 | 21.0 | |
| | | HFC152a | g | | 13.4 | | | | | | | |
| | | HCFC142b | g | | | 20.9 | | | | | | |
| | | HCFC141b | g | | | | | 9.3 | | | | |
| | | HFC245fa | g | | | | | | 12.7 | | | |
| | | HFC4310mee | g | | | | | | | | | 43.1 |
| | (D) | $N_2$ | g | | | | | | | <1.0 | | <1.0 |
| | | $CO_2$ | g | | | | | | | | <2.0 | |
| Viscosity | Component (A) | | Pa·s | 1.40 | 1.40 | 1.40 | 1.40 | 1.40 | 1.40 | 1.40 | 1.40 | 1.40 |
| | Fluid A | | Pa·s | 0.19 | 0.30 | 0.16 | 0.14 | <0.10 | 0.16 | 0.19 | 0.19 | <0.10 |
| | Component (B) | | Pa·s | 0.80 | 0.80 | 0.80 | 0.80 | 0.80 | 0.80 | 0.80 | 0.80 | 0.80 |
| | Fluid B | | Pa·s | <0.10 | 0.18 | 0.12 | <0.10 | <0.10 | <0.10 | 0.12 | 0.12 | <0.10 |
| Mixing Performance | | | | good | good | good | good | good | good | good | good | good |
| Discharging Performance | | | | good | good | good | good | good | good | good | good | good |
| Form Quality | Density | | kg·m3 | 63 | 56 | 62 | 50 | 52 | 58 | 50 | 52 | 66 |
| | Cell Size | | mm | <1.0 | <1.0 | <1.0 | <1.0 | <1.0 | <1.0 | <1.0 | <1.0 | <1.0 |
| | Closed-Cell Ratio | | % | 84 | 75 | 70 | 75 | 70 | 80 | 82 | 80 | <5 |

Table 3

| | | Compound | Unit | Example 13 | Example 14 | Example 15 | Example 16 | Example 17 | Example 18 | Comparative Example 1 | Comparative Example 2 | Comparative Example 3 |
|---|---|---|---|---|---|---|---|---|---|---|---|---|
| Fluid A | (A) | O,O'-Diallylbisphenol A | g | 43.2 | 43.2 | 43.2 | 43.2 | 43.2 | 43.2 | 43.2 | 43.2 | 43.2 |
| | | 2,2'-Diallylbisphenol A | g | 64.8 | 64.8 | 64.8 | 64.8 | 64.8 | 64.8 | 64.8 | 64.8 | 64.8 |
| | | Platinum Catalyst | mg | 460 | 460 | 460 | 460 | 460 | 460 | 460 | 460 | 460 |
| | (C) | HFC134a | g | | | 12.1 | 12.1 | 12.1 | | | | |
| | | n-Hexane | g | 14.7 | | | | | | | | |
| | | Cyclopentane | g | | 20.0 | | | | | | | |
| | | n-Butane | g | | | 8.1 | | | | | | |
| | | Propane | g | | | | 6.2 | | | | | |
| | | Dimethylether | g | | | | | 6.6 | | | | |
| | | Water | g | | | | | | 0.5 | | | |
| | | 2-Ethylhexanoic Acid | g | | | | | | 2.2 | | | |
| | (D) | $N_2$ | g | <1.0 | <1.0 | | | | | <1.0 | | <1.0 |
| | | $CO_2$ | g | | | | | | | | <2.0 | |
| | | n-Octane | g | | | | | | | | | 19.5 |
| Fluid B | (B) | B-3 | g | 104.8 | 104.8 | 104.8 | 104.8 | 104.8 | 125.8 | 104.8 | 104.8 | 104.8 |
| | (C) | HFC134a | g | | | 21.0 | 21.0 | 21.0 | | | | |
| | | n-Hexane | g | 14.7 | | | | | | | | |
| | | Cyclopentane | g | | 30.0 | | | | | | | |
| | (D) | $N_2$ | g | <1.0 | | | | | <1.0 | <1.0 | | <1.0 |
| | | $CO_2$ | g | | | | | | | | <2.0 | |
| | | n-Octane | g | | | | | | | | | 19.5 |
| Viscosity | Component (A) | | Pa·s | 1.40 | 1.40 | 1.40 | 1.40 | 1.40 | 1.40 | 1.40 | 1.40 | 1.40 |
| | Fluid A | | Pa·s | 0.26 | 0.16 | 0.15 | 0.19 | 0.17 | 0.96 | 1.40 | 1.40 | 0.15 |
| | Component (B) | | Pa·s | 0.80 | 0.80 | 0.80 | 0.80 | 0.80 | 0.80 | 0.80 | 0.80 | 0.80 |
| | Fluid B | | Pa·s | <0.10 | <0.10 | 0.12 | 0.12 | 0.12 | 0.96 | 1.40 | 1.40 | 0.12 |
| Mixing Performance | | | | good | good | good | good | good | good | poor | poor | poor |
| Discharging Performance | | | | good | good | good | good | good | good | poor | poor | poor |
| Form Quality | Density | | $kg \cdot m^3$ | 66 | 50 | 50 | 58 | 60 | 50 | uneven | uneven | 500 |
| | Cell Size | | mm | 1.0 ~ 2.0 | <1.0 | <1.0 | <1.0 | <1.0 | <1.0 | 3 ~ 5 | <1.0 | <1.0 |
| | Closed-Cell Ratio | | % | <5 | <5 | 75 | 70 | 50 | 10 | impossible to measure | impossible to measure | <5 |

Table 4

| | | Compound | Unit | Example 19 | Example 20 | Example 21 | Example 22 | Example 23 | Comperative Example 4 |
|---|---|---|---|---|---|---|---|---|---|
| Fluid A | (A) | O,O'-Diallylbisphenol A | g | 21.6 | 21.6 | | | | 0 |
| | | 2,2'-Diallylbisphenol A | g | 86.4 | 86.4 | | | | 108.0 |
| | | Allylated Phenol Resin (A-1) | g | | | 95.2 | | | |
| | | Allylated Polyether (A-2) | g | | | | 400 | | |
| | | Allylated Polyester (A-3) | g | | | | | 400 | |
| | | Platinum Catalyst | mg | 460 | 460 | 460 | 460 | 460 | 460 |
| | (C) | HFC134a | g | 15.1 | 12.1 | | | | |
| | | HCFC22 | g | | | 17.1 | 17.1 | 17.1 | 25.7 |
| | | HCFC141b | g | 11.6 | | | | | |
| Fluid B | (B) | B-3 | g | 104.8 | 104.8 | 104.8 | 15.0 | 104.8 | 104.8 |
| | (C) | HFC134a | g | 16.2 | 24.2 | | | | |
| | | HCFC22 | g | | | 17.1 | 17.1 | 17.1 | 11.0 |
| Viscosity | Component (A) | | Pa·s | 5.8 | 5.8 | 5.2 | 10.0 | 1.2 | 25.5 |
| | Fluid A | | Pa·s | 0.24 | 0.34 | 0.36 | 4.60 | 0.64 | 0.70 |
| | Component (B) | | Pa·s | 0.8 | 0.8 | 0.8 | 0.8 | 0.8 | 0.8 |
| | Fluid B | | Pa·s | 0.15 | 0.11 | 0.15 | <0.1 | 0.15 | 0.70 |
| Mixing Performance | | | | good | good | good | good | good | poor |
| Discharging Performance | | | | good | good | good | good | good | good |
| Form Quality | Density | | $kg \cdot m^3$ | 50 | 50 | 60 | 100 | 80 | 100 |
| | Cell Size | | mm | <1.0 | <1.0 | <1.0 | <1.0 | <1.0 | 3 ~ 5 |
| | Closed-Cell Ratio | | % | 70 | 82 | 70 | 80 | 70 | <5 |

**Example 24**

A mixture of 9.9 kg of O,O'-diallylbisphenol A and 6.6 kg of 2,2'-diallylbisphenol A (1.4 Pa • s at 23 °C) was mixed with 1.5 kg of HCFC141b and 0.1 kg of a platinum-vinylsiloxane solution to obtain Fluid A. And, 14.4 kg of B-1 obtained in Synthesis Example 1 and 4.0 kg of HFC245fa were mixed to obtain Fluid B. The viscosities of the component (A), Fluid A, the component (B) and Fluid B were as shown below;

Component (A): 1.38 Pa • s, Fluid A: 0.40 Pa • s
Component (B): 0.80 Pa • s, Fluid B: <0.1 Pa • s

The discharge was performed using FORMULATOR L-43P TWIN PACK AIRLESS GUN SYSTEM manufactured by BINKS (discharge pressure: 10 MPa, Fluid A/Fluid B = 1.0/1.0) to obtain a hard foam with satisfactory spraying performance and mixing performance being exhibited.

**Example 25**

A mixture of 10.6 kg of a terminally allyletherified polypropylene oxide (A-2), 0.3 kg of ethanol, 0.061 kg of platinum-vinylsiloxane and 1.5 kg of acetone was employed as Fluid A. Methylhydrogen polysiloxane (KF-99) was used as Fluid B. The viscosities of the component (A), Fluid A, the component (B) and Fluid B were as shown below;

Component (A): 10.0 Pa • s, Fluid A: 0.90 Pa • s
Component (B): <0.1 Pa • s, Fluid B: <0.1 Pa • s

The discharge was performed using FORMULATOR L-43P TWIN PACK AIRLESS GUN SYSTEM manufactured by BINKS (discharge pressure: 10 MPa, Fluid A/Fluid B = 7.0/1.0) to obtain a soft foam with satisfactory spraying performance and mixing performance being exhibited.

**Comparative Example 5**

A mixture of 15.4 kg diallylbisphenol A and 0.1 kg of platinum-vinylsiloxane was employed as Fluid A. A mixture of 12.0 kg of B-1 obtained in Synthesis Example 1 and 4.5 kg of HFC245fa was employed as Fluid B. The viscosities of the component (A), Fluid A, the component (B) and Fluid B were as shown below;

Component (A): 25.5 Pa • s, Fluid A: 25.5 Pa • s
Component (B): 0.80 Pa • s, Fluid B: <0.1 Pa • s

The discharge was performed using FORMULATOR L-43P TWIN PACK AIRLESS GUN SYSTEM manufactured by BINKS (discharge pressure: 10 MPa, Fluid A/Fluid B = 1.2/1.0) but the discharged fluid was in the form of a rod and a satisfactory foam could not be obtained due to a poor mixing.

**Examples 26 to 30, Comparative Example 6**

To a polypropylene bag fitted with an interior thin partitioning film and a discharging outlet, Fluid A and Fluid B prepared based on the compositions shown in Table 5 were added as being separated by the partitioning film. The container was broken by deforming it manually and then was shaken and deformed to mix the both fluids, and thereafter the mixture was discharged from the outlet. The mixing performance upon discharging (poor mixing or not) and the size of a cell after the foaming/setting were compared.

Each of the compositions of Examples 26 to 30 provided a satisfactory mixing performances, and yielded a satisfactory foam whose cell was fine. On the contrary, Comparative Example 6 employing as a component (A) a compound whose viscosity was exceeding 20Pa • s exhibited a poor mixing performance and gave a larger cell, due to which no satisfactory foam could be obtained.

Table 5

| | | Compound | Unit | Example 26 | Example 27 | Example 28 | Example 29 | Example 30 | Comperative Example 6 |
|---|---|---|---|---|---|---|---|---|---|
| Fluid A | (A) | O,O'-Diallylbisphenol A | g | 20.0 | | 40.0 | 40.0 | | |
| | | 2,2'-Diallylbisphenol A | g | 80.0 | | 60.0 | 60.0 | | 154.0 |
| | | Allylated Polyether (A-2) | g | | 106.0 | | | | |
| | | Allylated Polyester (A-3) | g | | | | | 200 | |
| | | Platinum Catalyst | g | 2.0 | 0.6 | 0.43 | 0.43 | 0.43 | 1.0 |
| | (C) | Water | g | 5.0 | | | | | |
| | | 2-Ethylhexanoic Acid | g | 20.0 | | | | | |
| | | Ethanol | g | | 3.0 | | | | |
| | | HFC245fa | g | | | 11.0 | 11.0 | 11.0 | |
| | | Acetone | g | | 15.0 | | | | |
| Fluid B | (B) | B-1 | g | 100.0 | 10.0 | 100.0 | | 100.0 | 120 |
| | | B-3 | g | | | | 97.0 | | |
| | (C) | HFC245fa | g | | | 30.0 | 30.0 | 30.0 | 45.0 |
| | | Triphenylphosphine (1% xylene solution) | g | 1.9 | | | | | |
| Viscosity | Component (A) | | Pa·s | 5.8 | 10.0 | 1.4 | 1.4 | 1.2 | 25.5 |
| | Fluid A | | Pa·s | 0.24 | 0.86 | 0.36 | 0.36 | 0.66 | 23.0 |
| | Component (B) | | Pa·s | 0.80 | 0.80 | 0.80 | 0.80 | 0.80 | 0.80 |
| | Fluid B | | Pa·s | 0.60 | 0.80 | <0.10 | <0.10 | <0.10 | <0.10 |
| Mixing Performance | | | | good | good | good | good | good | poor |
| Form Quality | Density | | $kg \cdot m^3$ | 40 | 60 | 40 | 40 | 70 | 50 |
| | Cell Size | | mm | <1.0 | <1.0 | <1.0 | <1.0 | <1.0 | 3 ~ 5 |
| | Closed-Cell Ratio | | % | <5 | <5 | 80 | 85 | 70 | 50 |

**Industrial applicability**

A foamable resin composition according to the invention can provide a foam exhibiting a satisfactory foaming condition and having a fine cell by means of a spraying or an infusion. Accordingly, it can be used advantageously to various applications such as soundproofing, heat insulation, waterproofing , airtightness, vibration control, protection, cushioning, decoration and the like.

Examples of such various applications are as follows; for vehicle use, listed are cushion materials for vehicles, ceiling materials, door trim linings, floor cushion vibration controlling and sound absorbing materials, automobile air conditioner heat insulating materials, dumper air sealings, waterproof materials, gaskets, air filters, center pillar garnish, headliners, quarter trims, dust covers, fuel tank safety foams, oil filters, flexible containers, crush pads, sunvisors, head rests, insulators, dashboards, door panels, pillar, console boxes, energy absorbing bumpers, heat insulators for refrigerator cars, cooler cars, tank trucks and refrigerating containers, overpass soundproofing materials etc.; for ships, heat insulators, buoyancy materials, FRP board core materials, buoys etc.; cushioning materials for bedding; for furniture, cushioning materials, packing materials etc.; for electric and electronic appliances, filters, sound absorbing heat insulators, printer sound absorbing materials, headphone ear pads etc.; shock absorbers for packaging; for house building purposes, heat insulators in roofs, ceilings, walls and floors, water pipe coverings, door panels, sizing panels, core materials for metals and sizing panels, core materials for partitioning panels, core materials for tatami and fusuma boards, heat insulating and retaining materials for bathtubs, joint materials between tiles, sealing materials, adhesives, system ceiling heat insulating panels, roof heat insulating waterproof materials, airtight heat insulators for freezing and airtight warehouses, heat retaining or cooling materials for tanks or pipings in plants, pipe-in-pipes; for domestic electronic appliances, heat insulating materials for refrigerators, freezers, rice cooker jars etc., anti-dewing materials for air conditioners; as well as sport items, medical products, cosmetic puffs, shoulder pads, slippers, sandals, needle point holders, toys and the like.

A method for producing a foam according to the invention enables a convenient and safe in situ production of a foam useful in the various applications listed above, since it employing a procedure in which a foamable resin composition of the invention are provided as two or more discrete mixing components which can be sprayed or infused after mixing or with mixing.

Moreover, a foamable resin composition and a method for producing a foam according to the invention can be used to take an impression of an article in a casting process, and to produce a model sample or an ornament from an impression.

**Claims**

1. A foamable resin composition which is divided into two or more discrete mixing components and which is foamed and set by mixing said discrete mixing components each other,

   wherein said composition comprises

   (A) an organic compound having a viscosity of 20 Pa • s or less at 23 °C and having a carbon-carbon double bond,
   (B) a compound having a hydrosilyl group, and
   (C) a foaming agent having a boiling point of 100 °C or lower and/or a compound having an OH group, and
   each of said two or more discrete mixing components comprises one or more of said components (A), (B) and (C) and has a viscosity of 5 Pa • s or less at 23 °C.

2. A foamable resin composition according to Claim 1 wherein the solubility of said component (C) in said component (A) at 23 °C is 5 parts or more by weight in 100 parts by weight of the component (A).

3. A foamable resin composition according to Claim 1 or Claim 2 wherein one of said two or more discrete mixing components is a discrete mixing component whose viscosity at 23 °C is adjusted at 5 Pa • s or less by admixing 5 parts or more by weight of the component (C) to 100 parts by weight of said component (A).

4. A foamable resin composition according to any of Claims 1 to 3 which comprises as said component (C) one or more foaming agents selected from the group consisting of a hydrofluorocarbon (HFC) having 2 or 3 carbon atoms, a hydrochlorofluorocarbon (HCFC) having 1 to 3 carbon atoms, a hydrocarbon having 3 to 6 carbon atoms and an ether having 2 to 6 carbon atoms.

5. A foamable resin composition according to any of Claims 1 to 4 which comprises as said component (C) one or more foaming agents selected from the group consisting of HFC134a, HFC152a, HCFC22, HCFC141b,

HCFC142b, HFC245fa, propane, n-butane, cyclopentane, dimethylether and diethylether.

**6.** A foamable resin composition according to any of Claims 1 to 5 which comprises as said component (C) an organic compound having an OH group bound directly to a carbon atom and/or water.

**7.** A foamable resin composition according to any of Claims 1 to 6 which comprises as a component (D), in addition to said components (A) to (C), a low boiling point component whose solubility in 100 parts by weight of the component (A) at 23 °C is 5 parts by weight or less and whose boiling point is 0 °C or lower.

**8.** A foamable resin composition according to Claim 7 wherein said component (D) is one or more selected from the group consisting of nitrogen, a compressed air, a carbonic acid gas, a flon and a saturated hydrocarbon.

**9.** A foamable resin composition according to any of Claims 1 to 8 wherein said component (A) is one or more selected from the group consisting of a phenol compound, a bisphenol compound, a polyether compound and a polyester polymer.

**10.** A foamable resin composition according to Claim 9 wherein said phenol compound and/or a bisphenol compound is represented by Formula (1):

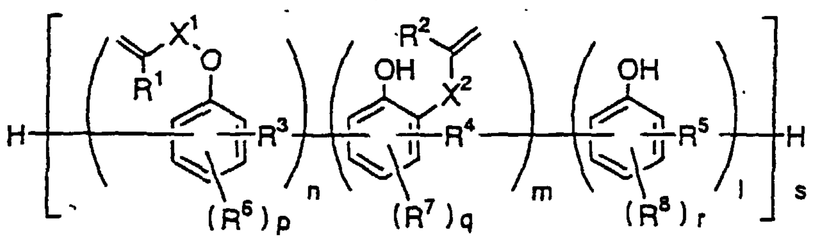

(1)

wherein each of $R^1$ and $R^2$ denotes a hydrogen atom or a methyl group, each of $R^3$, $R^4$ and $R^5$ denotes a divalent substituent having 0 to 6 carbon atoms, each of $R^6$, $R^7$ and $R^8$ is a monovalent substituent having 0 to 6 carbon atoms, each of $X^1$ and $X^2$ is a divalent substituent having 0 to 10 carbon atoms, and each of n, m and l is an integer of 0 to 300, s is an integer of 1 to 300, and each of p, q and r is an integer of 0 to 3.

**11.** A foamable resin composition according to Claim 9 or 10 wherein said bisphenol compound is a mixture of 95 to 5 parts by weight of 2,2'-diallylbisphenol A and 5 to 95 parts by weight of O,O'-diallylbisphenol A (amounting to 100 parts by weight in total).

**12.** A foamable resin composition according to any of Claims 1 to 11 wherein said component (B) comprises a linear and/or cyclic organosiloxane having one or more hydrosilyl groups in one molecule.

**13.** A foamable resin composition according to any of Claims 1 to 12 wherein said component (B) comprises a compound represented by Formula (2) or Formula (3):

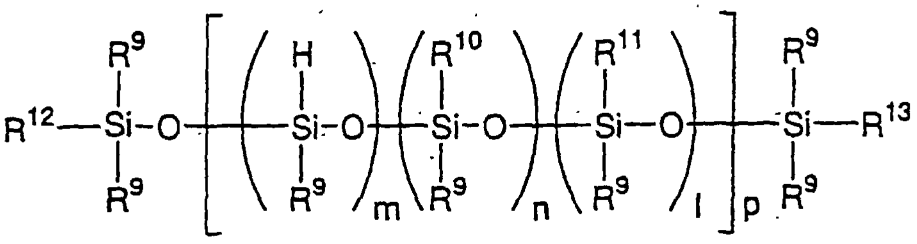

(2)

wherein $m \geq 2$, n and $l \geq 0$, $p \geq 1$, $3 \leq (m+n+l) \times p \leq 80$ , each of $R^9$, $R^{10}$, $R^{12}$ and $R^{13}$ is hydrogen or a hydrocarbon group having 1 to 20 carbon atoms optionally having one or more aromatic substituents, and $R^{11}$ substantially denotes an polyoxyalkylene group;

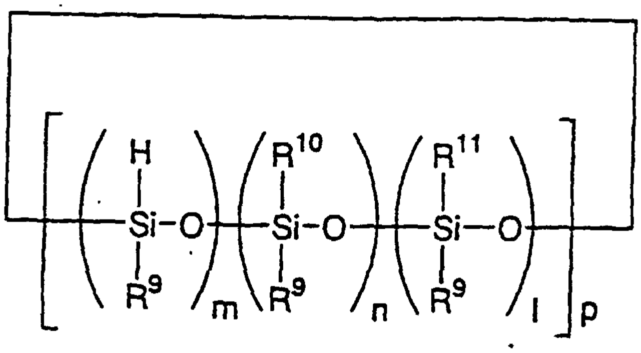

(3)

wherein m≥2, n and l≥0, p≥1, $3 \leq (m+n+l) \times p \leq 20$ and $R^9$, $R^{10}$ and $R^{11}$ are defined as above.

**14.** A foamable resin composition according to any of Claims 1 to 12 wherein said component (B) comprises a compound represented by Formula (7) or Formula (8):

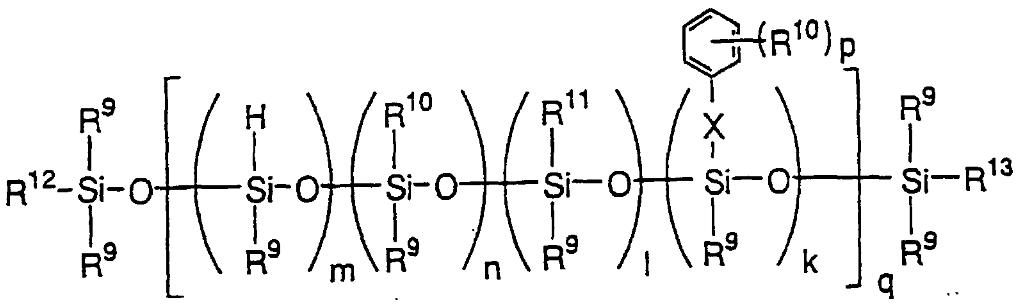

(7)

wherein m≥2, n≥0, l,k and q≥1, p is an integer of 0 to 5, $10 \leq (m+n+l+k) \times q \leq 80$ , each of $R^9$, $R^{10}$, $R^{12}$ and $R^{13}$ is hydrogen or a hydrocarbon group having 1 to 20 carbon atoms optionally having one or more aromatic substituents, and $R^{11}$ substantially denotes an polyoxyalkylene group;

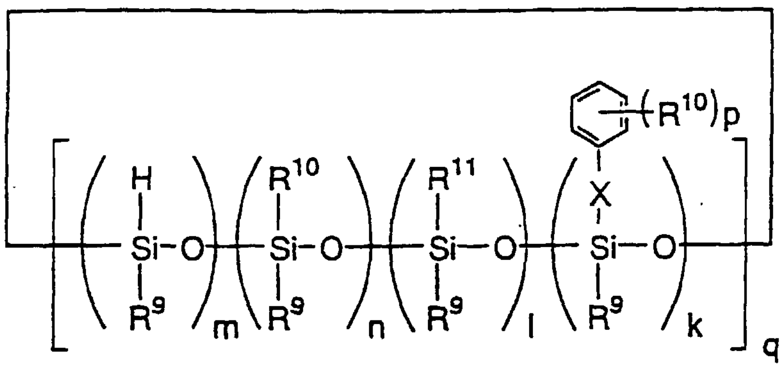

(8)

wherein m≥2, n≥0, l,k and q≥1, p is an integer of 0 to 5, $3 \leq (m+n+l+k) \times p \leq 20$ and $R^9$, $R^{10}$ and $R^{11}$ are defined as above.

**15.** A foamable resin composition according to any of Claims 1 to 12 wherein said component (B) comprises a compound obtained by reacting the following components (a), (b) and (c):

(a) a linear and/or cyclic organohydrogensiloxane having 3 to 10 silicone atoms in one molecule;
(b) a compound having two or more functional groups, in one molecule, capable of reacting with a hydrosilyl group of the component (a); and,

(c) a compound having one functional group, in one molecule, capable of reacting with a hydrosilyl group of the component (a).

**16.** A foam obtained by foaming/setting a foamable resin composition according to any of Claims 1 to 15.

**17.** A method for producing a foam wherein a foamable resin composition according to any of Claims 1 to 15 is prepared as two or more discrete mixing components each of which has a viscosity of 5 Pa • s or less at 23 °C, and wherein during a foaming/setting step these discrete mixing components are sprayed or infused with mixing or after mixing whereby effecting a foaming/setting.

# INTERNATIONAL SEARCH REPORT

International application No.
PCT/JP98/04989

A. CLASSIFICATION OF SUBJECT MATTER
Int.Cl$^6$ C08J9/12, C08L83/05

According to International Patent Classification (IPC) or to both national classification and IPC

B. FIELDS SEARCHED

Minimum documentation searched (classification system followed by classification symbols)
Int.Cl$^6$ C08J9/00-9/14, C08L83/04-83/08

Documentation searched other than minimum documentation to the extent that such documents are included in the fields searched
Jitsuyo Shinan Koho 1926-1998 Toroku Jitsuyo Shinan Koho 1994-1998
Kokai Jitsuyo Shinan Koho 1971-1998 Jitsuyo Shinan Toroku Koho 1996-1998

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | WO, 96/15194, A1 (Kaneka Corp.), 23 May, 1996 (23. 05. 96), Claims ; page 15, line 26 to page 16, line 8 ; page 43, lines 2 to 10 ; page 36, lines 13 to 25 ; page 12, line 25 to page 15, line 20 ; pages 17 to 19 ; page 43, line 24 to page 44, line 6 & EP, 739948, A | 1-17 |
| A | JP, 6-263989, A (Hercules Inc.), 20 September, 1994 (20. 09. 94), All references & EP, 600512, A2 | 1-17 |

☐ Further documents are listed in the continuation of Box C. ☐ See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 13 January, 1999 (13. 01. 99) | 26 January, 1999 (26. 01. 99) |
| Name and mailing address of the ISA/ Japanese Patent Office | Authorized officer |
| Facsimile No. | Telephone No. |

Form PCT/ISA/210 (second sheet) (July 1992)